# EUROPÄISCHE PATENTANMELDUNG

(11) **EP 1 347 220 A1**
(43) Veröffentlichungstag der Anmeldung: **24.09.2003**
(21) Anmeldenummer: 03000999.7
(22) Anmeldetag: 17.01.2003
(51) Int. Cl.: F16J 15/50

(54) **Dichtelement**

(30) Priorität: 23.03.2002 DE 10213137
(71) Anmelder: ROBERT BOSCH GMBH, 70442 Stuttgart (DE)
(72) Erfinder: Eigenmann, Joerg, 76149 Karlsruhe (DE); Kern, Ottmar, 76133 Karlsruhe (DE)

(57) **Zusammenfassung**

Die Erfindung betrifft Dichtelement (10) zur Abdichtung einer rotierbaren Welle (14), insbesondere einer Antriebswelle, die durch eine Öffnung (18) eines Bauteils (12) geführt ist, wobei das Dichtelement (10) einen ersten Bereich (20) aufweist, der mit dem Bauteil (12) fest verbunden ist, sowie einen zweiten Bereich (24) aufweist, der drehfest mit der Welle (14) verbunden ist.

Erfindungsgemäß ist vorgesehen, dass der erste (20) und der zweite (24) Bereich des Dichtelementes (10) fluiddicht miteinander verbunden sind.

## Beschreibung

### Stand der Technik

Die Erfindung betrifft ein Dichtelement zur Abdichtung einer Wellendurchführung eines Bauteils, insbesondere der Wellendurchführung an einem Gehäuse nach dem Oberbegriff des unabhängigen Anspruchs.

Zur Abdichtung der Durchführung einer rotierenden Welle wird typischerweise ein Radialwellendichtring benutzt, der im Wesentlichen aus einem elastischen Material besteht, die abzudichtende Welle ringförmig umschließt und mit einer Dichtlippe an der Welle anliegt. Der Radialwellendichtring ist in einem ersten Bereich an einem Bauteil befestigt, das von der Welle durchdrungen wird. Die Dichtlippe wird aufgrund von elastischen Materialeigenschaften oder durch die Verwendung eines Federelementes abdichtend gegen die Oberfläche der Welle gedrückt.

Eine solche dynamische Wellendichtung verhindert, daß Fluide durch die Wellendurchführung hindurch treten können und so beispielsweise in den Trockenraum eines Systems eindringen können. Die Lebensdauer solcher dynamischer Dichtungen hängt im Wesentlichen von der Erhaltung der Dichtlippe ab. Wird die Dichtlippe beschädigt oder kommt es zu einer Materialermüdung am Radialwellendichtring, so kann es zum teilweisen oder totalen Ausfall der Dichtung kommen.

Neben Bearbeitungsfehlern und Oberflächenrauhigkeiten an der Dichtlippe selbst, können auch im Fluid vorhandene, ungelöste Bestandteile, wie beispielsweise Formsand zu einem Verschleiß des Dichtsystems führen. Die reibschlüssige Verbindung der dynamischen Wellendichtung mit der Welle führt im Zusammenhang mit ungelösten Bestandteilen des Fluids zu einer Beschädigung der Wellendichtung in kürzester Zeit.

Aus der EP 0 798 498 B1 ist eine Radialwellendichtung zur Abdichtung von Flüssigkeiten bekannt, die einen Versteifungsring aufweist, in dem ein scheibenförmiges Dichtelement aus zähhartem Kunststoff eingelegt ist. Das scheibenförmige Dichtelement ist im Bereich seines Innendurchmessers trompetenartig in Richtung des abzudichtenden Raumes vorgezogen und endet in einer Kegelfläche, die eine kontinuierlich umlaufende Dichtkante begrenzt. An die der Außenluft zugewandte Seite der Dichtkante schließt sich eine Nut an, auf deren Grund eine radial nach innen vorspringende, hydrodynamisch wirkende Rückfördereinrichtung für Leckflüssigkeit vorgesehen ist, wobei diese Rückfördereinrichtung durch in Umfangsrichtung verlaufende Wellen gebildet wird. Die Radialwellendichtung der EP 0 798 498 B1 sieht für die Rückfördereinrichtung der Leckflüssigkeit in Umfangsrichtung verlaufende Wellen vor, die in Richtung des abzudichtenden Raumes ein keilförmig verjüngtes Innenprofil haben.

Auch bei Auftreten betriebsbedingter, radialer Auslenkbewegungen der abzudichtenden Welle wird dadurch eine Rückförderung von Leckflüssigkeit zurück in den abgedichteten Raum bewirkt.

Die US 6,328,311 B1 offenbart eine axiale bzw. radiale Wellendichtung, bei der ein erster Teil der Wellendichtung fest mit dem Gehäuse, das von einer Welle durchdrungen wird, verbunden ist. Dieser Teil der Wellendichtung dient als Träger für das eigentliche abdichtende Medium, das in der US 6,328,311 B1 aus einem Paar von leckdichten Bürsten besteht. Das Bürstenpaar wird an seinem einen Ende gegen die rotierende Welle gedrückt, und an seinem zweiten, der Welle abgewandten Ende von einer U-förmigen Haltevorrichtung der Wellendichtung gefaßt. Die leckdichte Bürstenanordnung ist weniger anfällig für eine Materialermüdung, so dass eine gute Abdichtung der Wellendurchführung über einen längeren Zeitraum gegeben ist.

Aus der US 2001/0002742 A1 ist eine Vorrichtung zur Abdichtung einer in ein Gehäuse laufenden Welle bekannt. Die Dichtung weist einen stationären Teil auf, der am Gehäuse befestigt ist und die Welle umgibt. Ferner weist die Dichtung der US 2001/0002742 A1 einen mit der Welle rotierenden Anteil auf, der drehfest mit der Welle verbunden ist. Ein Teil des stationären Anteils der Wellendichtung umgreift dabei den mit der Welle rotierenden Teil der Wellendichtung. Der rotierende und der statische Anteil dieser Wellendichtung sind so ineinander verschränkt, daß kein direkter Fluiddurchtritt in axialer Richtung möglich ist. Vielmehr sind die Fügungsspalte labyrinthartig angeordnet, so daß ein entsprechend geringer Druckverlust über dem Dichtelement auftritt.

### Vorteile der Erfindung

Das erfindungsgemäße Dichtelement mit den Merkmalen des unabhängigen Anspruchs hat demgegenüber den Vorteil, eine zuverlässige und vollständige Abdichtung der rotierbaren Welle gegenüber dem Bauteil, das von der Welle durchdrungen wird, zu ermöglichen. Leckagen durch einen Reibschluss treten an der erfindungsgemäßen Wellendichtung vorteilhafter Weise nicht auf. Da sich die Wellendichtung im Bereich der Welle mit der Winkelgeschwindigkeit der sich drehenden Welle bewegt, kommt es zu keinerlei relativer Bewegung zwischen der dynamischen Wellendichtung und der Welle. Ein Verschleiß der Wellendichtung aufgrund der Relativbewegung beziehungsweise eines Reibschlusses wird somit verhindert. Durch das erfindungsgemäße Dichtelement kann zuverlässig ein flüssigkeitsführender Teilraum gegen einen zweiten Teilraum abgedichtet werden, obwohl eine rotierbare Welle beide Teilräume zumindest teilweise durchdringt.

Durch die in den weiteren Ansprüchen aufgeführten Merkmale sind vorteilhafte Weiterbildungen und Verbesserungen des in Anspruch 1 angegebenen Dichtelementes möglich.

Eine vorteilhafte Ausführungsform sieht vor, das erfindungsgemäße Dichtelement im Wesentlichen scheibenförmig auszubilden und konzentrisch zur Welle anzuordnen.

In einem vorteilhaften Ausführungsbeispiel des erfindungsgemäßen Dichtelementes weist das Dichtelement neben seinem ersten und zweiten Bereich einen dritten Bereich auf, der elastisch gegenüber Torsionsbewegungen des Dichtelementes ist. Da das erfindungsgemäße Dichtelement in seinem ersten Bereich fest mit dem Bauteil verbunden ist und der zweite Bereich des Dichtelementes drehfest mit der Welle verbunden ist, kommt es bei Drehung der Welle zu einer Torsionsbewegung des Dichtelementes, die durch entsprechende elastische Eigenschaften des Dichtelementes bzw. von Teilbereichen des Dichtelementes aufgefangen werden kann. Das Dichtelement kann dazu beispielsweise einen dritten Bereich aufweisen, der in radialer Richtung der Welle zwischen dem zweiten Bereich und dem ersten Bereich angeordnet ist und eine erhöhte Elastizität bezüglich Torsionsbewegungen aufweist. Die erhöhte Elastizität lässt sich durch spezielle Materialien im dritten Bereich des erfindungsgemäßen Dichtelementes oder auch durch eine spezielle Querschnittsform des Dichtelementes in diesem Bereich realisieren.

In vorteilhafter Weise kann dieser dritte Bereich des erfindungsgemäßen Dichtelementes als ein ringförmiger Abschnitt ausgebildet werden, der aufgrund seiner Querschnittsstruktur ein erhöhtes elastisches Verhalten aufweist. Dazu kann das Dichtelement beispielsweise eine reduzierte Materialstärke, ein alternatives Material oder auch eine geometrische Form besitzen, die es ermöglichen, dass das erfindungsgemäße Dichtelement in sich verdrehbar ist. Auf diese Weise ist es möglich, das Dichtelement im ersten und zweiten Bereich starr auszubilden, um eine sichere Anbindung des Dichtelementes sowohl an das Bauteil als auch an die Welle zu gewährleisten, und dem gesamten Dichtelement trotzdem die notwendige Torsionsmöglichkeit zu geben.

In vorteilhafter Weise läßt sich ein solches Dichtelement einstückig ausbilden. Die Einstückigkeit gewährleistet eine erhöhte Leckagesicherheit des erfindungsgemäßen Dichtelementes. Das Dichtelement ist in diesem, Fall aufgrund seines Materials bzw. durch eine vorteilhafte Gestaltung der Querschnittsgeometrie derart elastisch verformbar, daß das Dichtelement die Rotation der Welle über einen großen Winkelbereich nachvollziehen kann, ohne daß es zu Defekten am Dichtelement oder seiner Verbindungsübergänge zur Welle bzw. zu dem von der Welle durchdrungenen Bauteil kommen kann.

In einer vorteilhaften Ausführungsform läßt sich das erfindungsgemäße Dichtelement aus einem Elastomer herstellen, der beispielsweise an die Welle bzw. das von der Welle durchdrungene Bauteil beispielsweise aufgespritzt, geklebt oder auch aufvulkanisiert werden kann.

Es läßt sich auch ein Metallring in das Dichtelement integrieren, beispielsweise umspritzen, der dann in eine Lagerplatte des von der Welle durchdrungenen Bauteils eingepreßt oder geklemmt werden kann, um so das erfindungsgemäße Dichtelement sicher und fluiddicht mit dem Bauelement zu verbinden. Weitere dem Fachmann bekannte Befestigungs- und Verbindungsmethoden lassen sich zur funktionsgerechten Anordnung des erfindungsgemäßen Dichtelementes ebenso nutzen.

In einer weiteren vorteilhaften Ausführungsform des erfindungsgemäßen Dichtelementes ist dessen Elastizität derart ausgeprägt, daß das Dichtelement bei Verdrehen der Welle aus ihrer Ruhelage heraus ein Drehmoment auf die Welle ausübt, welches der ursprünglichen Verdrehrichtung der Welle entgegenwirkt. Auf diese Weise ist es in einfacher Form möglich, ein Rückstellmoment für die Welle zu realisieren, ohne zusätzliche, ein solches Drehmoment erzeugende, Mittel zu verwenden. Wird das erfindungsgemäße Dichtelement beispielsweise für die motorgetriebene Antriebswelle eines Drehkegelventils genutzt, so kann in vorteilhafter Weise die Motoransteuerung lediglich in einer Richtung erfolgen, da aufgrund des erfindungsgemäßen Dichtelementes ein rücktreibendes Moment der Motorstellrichtung entgegenwirkt. Auch ist es möglich, das rücktreibende Moment, welches durch das erfindungsgemäße Dichtelement zur Verfügung gestellt wird, lediglich unterstützend zu einem zusätzlichen Motorbetrieb zu nutzen.

In vorteilhafter Weise läßt sich durch das erfindungsgemäße Dichtelement ein Wellenantrieb abdichten, der im Wesentlichen auf Rotationen in einem Winkelbereich von kleiner oder gleich 360 Grad beschränkt ist. Das erfindungsgemäße Dichtelement ermöglicht somit, die Lebensdauer von dynamischen Dichtungen deutlich zu erhöhen. Durch einen Verzicht auf die Relativbewegung von Dichtelement und rotierender Welle ist es möglich, die Verschleißanfälligkeit der reibschlüssigen Verbindung von dynamischen Wellendichtungen des Standes der Technik zu umgehen.

### Zeichnung

In der Zeichnung sind Ausführungsbeispiele des erfindungsgemäßen Dichtelementes zur Abdichtung einer rotierbaren Welle dargestellt, die in der nachfolgenden Beschreibung näher erläutert werden sollen. Die Figuren der Zeichnung, deren Beschreibung sowie die auf das erfindungsgemäße Dichtelement gerichteten Ansprüche enthalten zahlreiche Merkmale in Kombination. Ein Fachmann wird diese Merkmale auch einzeln betrachten und so zu weiteren sinnvollen Kombinationen zusammenfassen.

Es zeigen:
- Figur 1: ein erstes Ausführungsbeispiel eines erfindungsgemäßen Dichtelementes in einer Querschnittsdarstellung,
- Figur 2: ein zweites Ausführungsbeispiel des erfindungsgemäßen Dichtelementes in seiner Einbaulage zwischen einer Welle und einem von der Welle durchdrungenen Bauteil im Querschnitt,
- Figur 3: eine perspektivische Darstellung des erfindungsgemäßen Dichtelementes nach dem Ausführungsbeispiel der Figur 2,
- Figur 4: ein weiteres Ausführungsbeispiel des erfindungsgemäßen Dichtelementes, eingesetzt zwischen einem Bauteil und einer dieses Bauteil durchdringenden Welle.

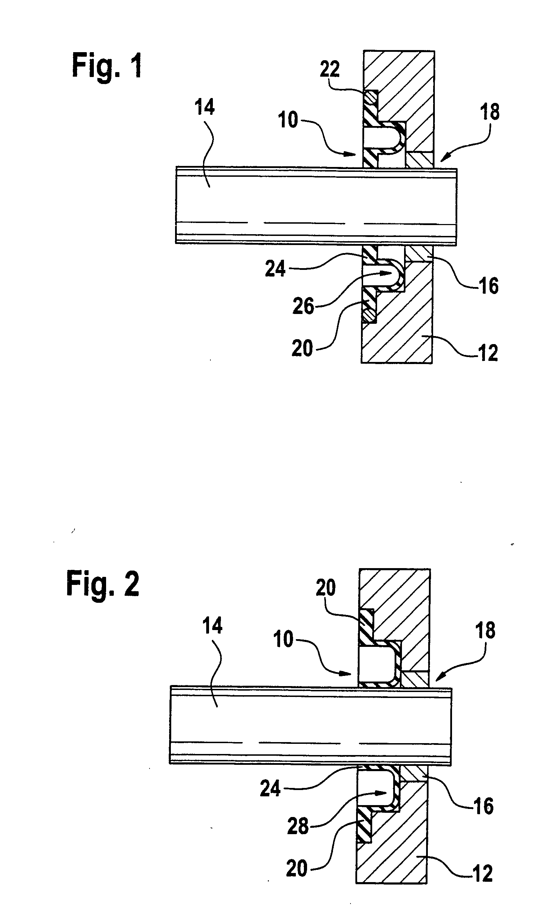

Figur 1 zeigt ein erstes Ausführungsbeispiel für das erfindungsgemäße Dichtelement 10 in einer typischen Einbaulage. Ein Bauteil 12, das beispielsweise eine Gehäusewand sein kann, wird von einer Welle 14 durchdrungen. Die Welle 14 wird von einem Lager 16, welches in dem Bauteil 12 befestigt ist, geführt. Weitere Lager und ein zum Bauteil zugehöriges Gehäuse sind der Übersicht halber in Figur 1 nicht weiter ausgeführt. Zur Abdichtung der Wellendurchführung 18 ist das Dichtelement 10 sowohl mit der Welle 14 als auch mit dem Bauteil 12 fest verbunden. Das Dichtelement 10 besitzt dazu einen ersten Bereich 20, der fest und dichtend mit dem Bauteil 12 verbunden ist.
Im Ausführungsbeispiel der Figur 1 ist in den ersten Bereich 20 des Dichtelementes 10 ein Metallring 22 eingearbeitet, der in das Bauteil 12 eingepreßt wird. Ein zweiter Bereich 24 des im Wesentlichen scheibenförmigen Dichtelementes ist fest mit der Welle 14 verbunden. Das Dichtelement 10 wird dazu im zweiten Bereich 24 auf die Welle 12 aufgespritzt, mit dieser verklebt oder aufvulkanisiert. Andere dem Fachmann geläufige Verbindungsmethoden sind selbstverständlich ebenso möglich.

Zwischen dem ersten Bereich 20 und dem zweiten Bereich 24 des Dichtelementes 10 befindet sich in radialer Richtung der Welle 14 ein dritter Bereich 26, der elastisch gegenüber Verdrehungen des ersten Bereichs 20 relativ zum zweiten Bereich 24 ist. Im Ausführungsbeispiel eines erfindungsgemäßen Dichtelementes nach Figur 1 ist der dritte Bereich 26 durch eine reduzierte Materialstärke gekennzeichnet, so daß das Dichtelement elastisch auf Torsionen der beiden Bereiche 20 beziehungsweise 34 zueinander reagieren kann. Neben der reduzierten Materialstärke des Dichtelementes im dritten Bereich 26 verläuft dieses in axialer Richtung der Welle bogenartig zwischen dem ersten und dem zweiten Bereich die eine im Wesentlichen ebene, scheibenförmige Ausformung besitzen.

In vorteilhafter Weise läßt sich das erfindungsgemäße Dichtelement einstückig aus einem elastischen Material, beispielsweise einem Elastomer, herstellen. Aufgrund der elastischen Materialeigenschaften und der besonderen Querschnittsform des erfindungsgemäßen Dichtelementes ist es möglich, diesem die notwendige Elastizität für entsprechende Rotationsbewegungen der Welle zu verleihen. Obwohl das erfindungsgemäße Dichtelement prinzipiell nicht auf einen bestimmten Drehwinkel der Welle beschränkt ist, eignet sich das System aufgrund der Verformung des Dichtelementes in vorteilhafter Weise für Verdrehungen bis ca. 90 Grad.
Der mögliche Verdrehwinkel des erfindungsgemäßen Dichtelementes ist neben seinen geometrischen Abmessungen unter anderem auch bestimmt durch die Umgebungstemperatur. Durch die Verdrehung des Dichtelementes bei einer Rotation der Welle wird im Dichtelement ein Gegenmoment aufgebaut, welches in vorteilhafter Weise im Reversierbetrieb unterstützend genutzt werden kann.

Figur 2 zeigt ein zweites Ausführungsbeispiel eines erfindungsgemäßen Dichtelementes. Gleiche oder gleichartige Bauteile sind mit gleichen Bezugszeichen wie im Ausführungsbeispiel der Figur 1 versehen. Ein Bauteil 12 weist eine Wellendurchführung 18 auf, in die eine Welle 14 eingebracht ist. Die Welle 14 wird durch ein Lager 16 geführt, welches im Bauteil 12 integriert ist. Weitere die Welle führende Lager sowie ein zum Bauteil 12 gehöriges Gehäuse sind der Übersicht halber in Figur 2 nicht dargestellt.

Zur Abdichtung der Wellendurchführung 18 ist ein im Wesentlichen scheibenartiges, konzentrisch zur Welle 14 verlaufendes Dichtelement 10 in das Bauteil 12 integriert. Dazu ist das Dichtelement 10 in einem ersten, starren Bereich 20 in das Bauteil 12 eingeklebt. In Richtung auf die Welle 14 hin schließt sich an den ersten Bereich 20 ein bogenförmig ausgebildeter Bereich 28 an, der in dem zweiten Bereich 24 parallel zur Welle an diese heran geführt ist. Im zweiten Bereich 24 ist das erfindungsgemäße Dichtelement fest mit der Welle 14 verbunden. Das Dichtelement 10 besteht im bogenförmigen Bereich 28 aus einem elastischen Material, welches entsprechende Torsionsbewegungen zwischen dem ersten Bereich 20 des Dichtelementes 10 und seinem zweiten Bereich 24 aufnehmen kann. Aufgrund der elastischen Materialeigenschaften und dem reduzierten Materialquerschnitt im Bereich 28 ist es möglich, daß sich das Dichtelement 10 im bogenförmigen Bereich 28 verformt, wenn sich die Welle dreht.

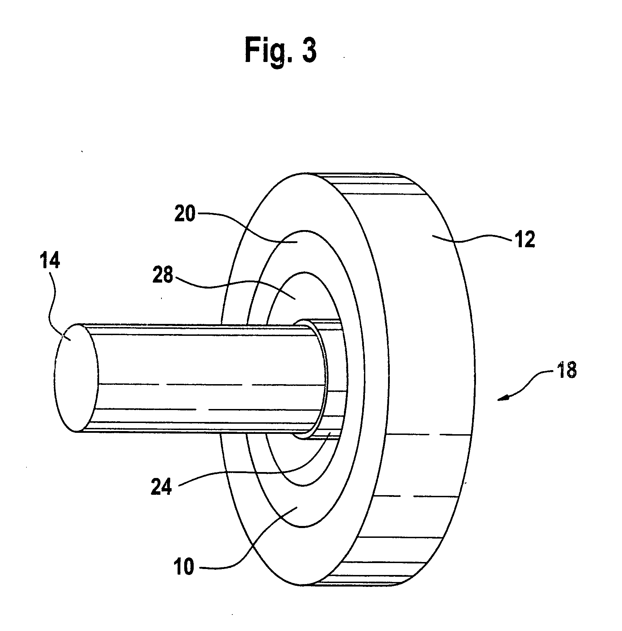

Figur 3 zeigt eine perspektivische Ansicht des erfindungsgemäßen Dichtelementes nach dem Ausführungsbeispiel der Figur 2.

Zur Abdichtung einer Wellendurchführung 18 an einem Bauteil 12 ist ein im Wesentlichen scheibenförmiges, konzentrisch zu einer Welle 14 verlaufendes Dichtelement 10 in das Bauteil 12 integriert. Dazu ist das Dichtelement 10 in einem ersten, starren Bereich 20 in das Bauteil 12 eingeklebt. In Richtung auf die Welle 14 hin schließt sich an den ersten Bereich 20 ein elastisch ausgebildeter Bereich 28 geringerer Materialstärke an, der in dem zweiten Bereich 24 parallel zur Welle an diese kragenförmig heran geführt ist. In diesem zweiten Bereich 24 ist das erfindungsgemäße Dichtelement fest mit der Welle 14 verbunden.

Aufgrund der elastischen Materialeigenschaften und dem reduzierten Materialquerschnitt im Bereich 28 ist es möglich, daß sich das Dichtelement 10 im diesem Bereich 28 verformt, wenn sich die Welle dreht. Auf diese Weise erlaubt das erfindungsgemäße Dichtelement Torsionsbewegungen, die durch eine relative Verdrehung der Welle 14 gegenüber dem Bauteil 12 entstehen, ohne dass diese zu einem Materialbruch führen würden.

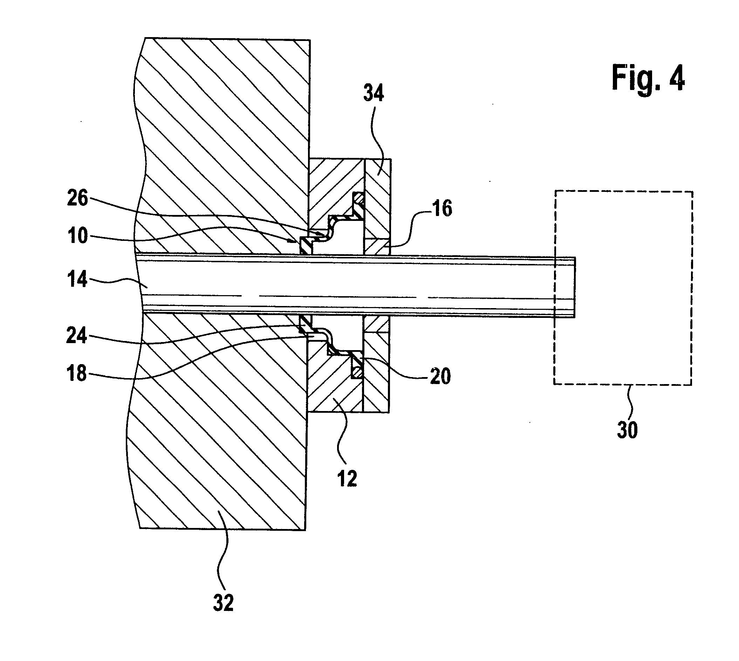

In Figur 4 ist ein weiteres Ausführungsbeispiel eines erfindungsgemäßen Dichtelementes 10 dargestellt. Eine Welle 14 wird von einem nur symbolisch dargestellten Elektromotor 30 angetrieben und betätigt ein nicht weiter dargestelltes Ventilglied eines Drehkegelventils. Dazu ist die Welle 14 mittels einer Wellendurchführung 18 in ein Ventilgehäuse 32 hinein geführt. Am Ventilgehäuse 32 befindet sich ein Lagerschild 34 zur Aufnahme eines Wellenlagers 16. Zwischen dem Lagerschild 34 und der das Lagerschild durchdringenden Welle 14 ist ein erfindungsgemäßes Dichtelement 10 angeordnet. Das erfindungsgemäße Dichtelement 10 besteht aus einem ersten, starren Bereich 20, der mit dem Lagerschild 34 verbunden ist sowie aus einem zweiten ebenfalls starren Bereich 24, der fest mit der Welle 14 verbunden ist.

Zwischen seinem ersten Bereich 20 und seinem zweiten Bereich 24 weist das erfindungsgemäße Dichtelement 10 einen dritten Bereich 26 auf, der als elastischer Balg zwischen den beiden starren Endbereichen ausgebildet ist. Der dritte Bereich 26 verleiht dem erfindungsgemäßen Dichtelement 10 die notwendige Elastizität, um relative Drehbewegungen des ersten Bereichs 20 gegenüber dem zweiten Bereich 24 zu ermöglichen.

Das erfindungsgemäße Dichtelement ist nicht auf die in den Figuren 1 bis 4 dargestellten Ausführungsbeispiele beschränkt.

Das Dichtelement läßt sich beispielsweise in vorteilhafter Weise als ein einstückiges, aus einem Elastomer bestehenden Dichtring oder Dichtbalg ausführen, der entsprechende Mittel zur Befestigung sowohl an der Welle als auch an einem Bauteil der Wellendurchführung aufweist.

Das erfindungsgemäße Dichtelement ist nicht beschränkt auf die in den Ausführungsbeispielen zitierten Befestigungsmethoden an der Welle bzw. dem Bauteil der Wellendurchführung. Weitere, dem Fachmann bekannte Befestigungsmethoden können für das erfindungsgemäße Dichtelement selbstverständlich ebenso genutzt werden.

Das erfindungsgemäße Dichtelement ist nicht beschränkt auf die Abdichtung einer Welle zum Antrieb eines Ventilgliedes. Vielmehr stellt ein solches steuerbares Ventil eine einzelne, beispielhaft ausgewählte Anwendung für das erfindungsgemäße Dichtelement dar.

## Patentansprüche

1. Dichtelement (10) zur Abdichtung einer rotierbaren Welle (14), insbesondere einer Antriebswelle, die durch eine Öffnung (18) eines Bauteils (12) geführt ist, wobei das Dichtelement (10) einen ersten Bereich (20) aufweist, der mit dem Bauteil (12) fest verbunden ist, sowie einen zweiten Bereich (24) aufweist, der drehfest mit der Welle (14) verbunden ist, **dadurch gekennzeichnet, dass** der erste (20) und der zweite (24) Bereich des Dichtelementes (10) fluiddicht miteinander verbunden sind.

2. Dichtelement nach Anspruch 1, **dadurch gekennzeichnet, dass** das Dichtelement (10) auf Grund seines Materials und/oder seiner Querschnittsgeometrie elastisch verformbar gegenüber Drehbewegungen ist.

3. Dichtelement nach Anspruch 2, **dadurch gekennzeichnet, dass** das Dichtelement (10) einen dritten Bereich (26) aufweist, der elastisch gegenüber Torsionsbewegungen des Dichtelementes (10) ist.

4. Dichtelement nach Anspruch 3, **dadurch gekennzeichnet, dass** der dritte Bereich (26) des Dichtelementes (10) in radialer Richtung der Welle (14) zwischen dem zweiten Bereich (24) und dem ersten Bereich (20) liegt.

5. Dichtelement nach Anspruch 3 oder 4, **dadurch gekennzeichnet, dass** der dritte Bereich (26) des Dichtelementes (10) einen Abschnitt, insbesondere einen ringförmigen Abschnitt, erhöhter Elastizität aufweist.

6. Dichtelement nach einem der vorhergehenden Ansprüche, **dadurch gekennzeichnet, dass** das Dichtelement (10) einstückig ausgebildet ist.

7. Dichtelement nach einem der vorhergehenden Ansprüche, **dadurch gekennzeichnet, dass** das Dichtelement (10) aus einem Elastomer besteht.

8. Dichtelement nach einem der vorhergehenden Ansprüche, **dadurch gekennzeichnet, dass** das Dichtelement (10) derart elastisch ist, dass das Dichtelement (10) bei Verdrehen der Welle (14) aus einer Ruhelage heraus, ein der Verdrehung der Welle (14) entgegen wirkendes Drehmoment erzeugt.

9. Dichtelement nach einem der vorhergehenden Ansprüche, **dadurch gekennzeichnet, dass** das Dichtelement (10) Mittel (22) aufweist, die es ermöglichen, das Dichtelement (10) in Wirkverbindung mit dem Bauteil (12) und/oder der Welle (14) zu bringen.
